# EUROPEAN PATENT APPLICATION

(11) **EP 2 829 178 A1**
(43) Date of publication of application: **28.01.2015**
(21) Application number: 14175890.4
(22) Date of filing: 05.07.2014
(51) Int. Cl.: A01M 13/00

(54) **Repellent or insecticide in the container, method of its production and method of its distribution in space**

(30) Priority: 05.07.2013 SK 500802013 U
(71) Applicant: Vyskocil, Roman, 691 42 Valtice (CZ)
(72) Inventor: Vyskocil, Roman, 691 42 Valtice (CZ)
(74) Representative: Porubcan, Róbert

(57) **Abstract**

A repellent or an insecticide has an active ingredient from a pyrethroid group located in a container of a smoke shell. The smoke shell contains a combustible smoke generating mixture and the lighter (3) touching the mixture. This mixture is in contact with the active ingredient in such a way that during the combustion the active ingredient is significantly evaporated and/or sublimated, and subsequently carried by the resulting smoke to the space outside the container (1). The active ingredient forms from 0, 1 % to 25% of the mass of the smoke generating mixture. Preferably, the active ingredient is a combination of two substances, more preferably one substance forms up to 5% of the mass of the smoke generating mixture and other forms up to 20% of the mass of the mixture. The smoke functions not only as a carrier, but it reliably delimits the scope of the treatment. After the smoke settles, the active ingredients are spread on the surfaces and objects in the treated area, they are not in the air and a person can freely move in the treated area.

## Description

### Field of technology

The invention concerns a repellent and an insecticide in a container with an active ingredient from a pyrethroid group, which uses a new method of distribution of the active ingredient in a space by means of a smoke produced in the container. A method of production of the repellent or insecticide is new, too.

### Prior state of the art

Multiple repellent or insecticide preparations in multiple forms and packaging exist for end-user use. Sprays propelled by a propellant are known, as are mechanical sprayers, and so on. Active ingredients are disclosed in great detail. Only ingredients with known effects are used and an introduction of a new ingredient is problematic due to the legal requirements and necessity of carrying out large-scale and expensive tests. Insects and mosquitoes are not only annoying, but they can spread infections, too.

Repellents for common end-user have to be complicatedly spread in the desired space, for example by small nozzle of a spray. Common user lacks professional means for fast spreading of the repellent in larger space.

Solutions according to patents such as CN2061409, CN2295330, CN2524501, CN2061409U, CN102484989A have a small reach of spreading of an active ingredient and they are intended mostly for interior usage. Various burning objects are known, for example spirals, whereby the resulting flue gases create a repellent substance. Their effect is small, though, or these flue gases carry an active ingredient into the space, where it degrades due to the heat.

Solution according to JPH01117739 A has bags with three fillings in a container; the second filling contains hydro exothermic preparation and third filling is made of water. By piercing the bags with a needle the content of the bags is mixed and exothermic reaction leads to evaporation of a repellent. The production of such device is complicated as is its use, and reacted substance always remains in the container after the activation and it purposelessly binds a repellent. Another disadvantage is the use of bags which should be easy to pierce, which can cause problems during transport. Publication JPH067065 A discloses a paper container with burning insecticide. This, however, degrades an insecticide substance and such solution has therefore a little effectiveness.

Solution according to JPH1189507 uses a burning spiral, which gradually detonates the charges. These detonations have a repellent effect. The solution is dangerous and noisy. The publication JPS63267705A discloses a slow burning fuel, which by heat decomposes a foam generating agent placed next to the insecticide. It does not solve the problems concerning the thermal decomposition of the active ingredient and its effectiveness is small. Publication CN102972433A discloses an insecticide with fuel and the smoke generating substance for interior use, but it does not solve the problems concerning the thermal decomposition of the active ingredient and its reach is small.

The problems with decomposition of the active ingredient are partially solved by publication WO2012057404, which is however difficult and demanding to operate.

No solution which is both easy to use and capable of spreading a repellent or an insecticide in short time in large space, too, for example in a forest, where large spraying technology cannot be used, is known.

### Subject matter of the invention

These deficiencies are essentially remedied by a repellent or an insecticide in a container with an active ingredient from a pyrethroid group, whereby the active ingredient is a part of a smoke shell; the container is an outer cover of the smoke shell with at least one opening for the outflow of the smoke; the smoke shell contains a combustible smoke generating substance and it is adjusted for the use of a lighter, which in operative position touches the smoke generating substance, according to this technical solution, which essence lies in the fact that the smoke generating substance is in contact with the active ingredient in such a way that it is evaporated and/or sublimated during the combustion of the smoke generating mixture, and that it is carried by the smoke into the space outside the container. The smoke generating substance will have a form and shape of a charge which corresponds to the shape of the container. The lighter can be direct or separate part of the smoke shell.

Such arrangement has been proved preferable where the powdery smoke generating substance is molded into a compact shape which corresponds to the inner shape and dimensions of the bottom part of the container. Before the molding, the combustible smoke generating substance is in the powder form, preferably with a smooth fraction, the smoke generating substance is sprayed by or dipped into the dilution with an active ingredient and then it is molded. The particles of the smoke generating substance are covered by the dilution of the active ingredient, which is preferable to simple mixing of the powdery particles of the active ingredient and the smoke generating substance.

The most usual lighter will be a mechanically activated one. Its use can be blocked by various sorts of fuses akin to hand grenades. The touch of the lighter with the smoke generating mixture is necessary only during activation, and so it will be preferable, in order to increase the safety, that the lighter will be separated from the smoke generating mixture during storage and transport (for example during air transport), and will remain so until the activation. In principle it is possible to produce a lighter in form of an igniter cord, or an electronically controlled detonator, or a friction device, and so on.

The first essential feature of this technical solution is a connection of a repellent active ingredient with the smoke shell, whereby the smoke acts as a carrier distributing the active ingredient into the space. The smoke shell has a container, which is resistant to the pressure produced by sudden generation of the smoke. Thanks to the massive generation of the smoke and aptly designed opening for the outflow of the smoke, a high outflow speed of the smoke is achieved and so the smoke shell has large reach in the space. Various smoke generating mixtures, originally developed for military, for armed forces or for civilian authorities, can be used here. Smoke is also generated by some repellent combustible spirals, but in such cases the smoke is just an inessential, incidental phenomenon. In this technical solution we have in mind an intensive, massive smoke, which can be perceived as a main, visible phenomenon during the deployment of the smoke shell, whereby the smoke creates a thick, opaque smoke cloud at least in the proximity of its outflow from the container. During combustion of hitherto known repellent devices the active ingredients were produced in the process of combustion; in this technical solution the active ingredient is added to the smoke generating mixture in the ready-made state. During its combustion the crucial part of the active ingredient is evaporated or sublimated, depending on the nature of the active ingredient. Normally more than 90% of the active ingredient gets into the gaseous state in this process, whereby more than 50% should be considered essential.

The smoke generating substance is in contact with the active ingredient so the heat generated by the combustion of the smoke generating substance acts directly onto the particles of the active ingredient and a resulting gas, that is, the active ingredient in the gaseous state, is carried by the smoke. Even in case of a partial degradation of the active ingredient, the level of degradation will be low. Connection of the active ingredient with the smoke generating substance can have different forms. The active ingredient can be mixed directly into the smoke generating substance, it can in the layer above the smoke generating mixture's surface, or it can be in multiple layers for a gradual release.

In order to decrease the degradation of the active ingredient it is preferable that the active ingredient is tightly bound to the particles of the smoke generating mixture, and that the resulting mixture is homogenous. Between the core of the burning particle of the smoke generating mixture and the active ingredient there should be such distance that an effective transfer of the heat is ensured, but at the same time the heat on the surface of the burning particle should be relatively low, up to 150° C, preferably 125° C, especially preferably 100° C, so there is no degradation of the active ingredient. In the solutions where the active ingredient is separated, distanced from the heating medium, the heat of the heating medium has to be higher so that even the distanced parts of the active ingredient are sufficiently heated, which however leads to the degradation in the other part of the active ingredient. In solution according to this invention, it is therefore important that the active ingredient is tightly bound to the particles of the smoke generating mixture. The choice of the components of the smoke generating mixture (fuel, retarder or burning rate regulator and a smoke generating agent) should be guided by the demand for the heat of the combustion on the surface of the particle up to 150° C, preferably 125° C, especially preferably 100° C. The time of burning of 100 g of the charge of the smoke generating mixture with the bound active ingredient can be from 100 to 200 seconds.

Molded charge of the smoke generating mixture and the active ingredient can have a thin layer or a delimited zone of black gunpowder, which is located at the place where the lighter acts and it can help in the first phase of the spreading of the fire.

The smoke generating mixture is, in a preferable arrangement, adjusted in such a way that the combustion is stable and not explosive; for example 120 g of the smoke generating mixture burns for circa 180 sec, it is accompanied by a massive smoke outflow, but the heat in the core is no higher than 150° C. Between the charge of the smoke generating substance and a cover there can be an isolation, for example a paper, thanks to which the outer surface of the container can be cold for a relatively long period (at least a half of the time of burning), and so it can be held in a hand without getting burned.

The active ingredient can constitute from 0,1% to 25% of the mass of the whole smoke generating mixture combined with the active ingredient; the active ingredient can be allethrin, bifenthrin, cypermethrin, cifenotrin, deltamethrin, empenthrin, etofenprox, imiprothrin, kadetrin, metoflutrin, S-methoprene, permethrin, pralletrin, resmethrin, sumitrin, tetramethrin, tralomethrin, transfluthrin. It is possible to use either one of the abovementioned ingredients or combination of the abovementioned ingredients. It is preferable to use two of the abovementioned ingredients. It will be especially preferable to use two of the abovementioned ingredients in such a way that one will constitute 1% to 5% of the mass of the smoke generating mixture and second will constitute 1% to 20% of the mass of the smoke generating mixture. The percentual shares express the shares of the mass of the whole mixture.

Pyrethroids are synthetic chemical compounds similar to natural substances produced by some flowers (Chrysanthemum cinerariaefolium a C. coccineum); they act as neurotoxins. Pyrethroids are used in commercially available preparations with repellent or insecticidal effects. Pyrethroids affect the functioning of neurons by prolonging the activation of sodium channels. Pyrethroids are in general considered harmless for mammals and birds, but they are considered toxic for fishes and cats.

In agriculture, the permethrin (a systematic term for 3-Phenoxybenzyl (1*RS*)-*cis*,*trans*-3-(2,2-dichlorovinyl)-2,2-dimethylcyclopropanecarboxylate, formula being C₂₁H₂₀Cl₂O₃) is used for protection of cereals and also for destruction of vermin on poultry. In health services, the permethrin is used against parasites such as lice, and it is also used in preparations against ants for use in households. Transfluthrin (a systematic term for (1 R,3S)-3-(2,2-dichlorovinyl)-2,2-dimethyl-1-cyclopropanecarboxylic acid (2,3,5,6-tetrafluorophenyl)methyl ester, formula being C₁₅H₁₂Cl₂F₄O₂) belongs to pyrethroid group and is used as a fast operating insecticide.

Combination of permethrin and transfluthrin is preferable for use in this technical solution. It will be preferable if both these substances are in crystal form. During production they are heated and reduced by alcohol, mixed together, and the dilution is sprayed on the powdery part of the smoke generating mixture. Such combination of active ingredients is characterized by low level of degradation during combustion of the smoke generating substance, as well as by fast sublimation, which is preferable for uniform distribution of smoke flowing from the smoke shell.

Usage of transfluthrin results in an inhalation effect of the preparation. In hitherto known repellents only contact effects have been perceived, whereby the combustion releases the active ingredient into a space, where it settles down and therefore only has a contact effect. Submitted invention has, if the transfluthrin is used, also a so called "space effect", it is therefore "space repellent".

When transfluthrin is used as an active ingredient, it is preferable to mix the synergizing substance piperonyl butoxide (PBO, systematic term for 5-[2-(2-butoxyethoxy)ethoxymethyl]-6-propyl-1,3-benzodioxole, formula is C₁₉H₃₀O₅) with the active ingredient, which increases the effects of pyrethroids. Usage of piperonyl butoxide can have stabilizing effects during a heat transmission from the particle of the smoke generating mixture onto the active ingredient, which uniformly decreases the level of degradation of the active ingredient.

Components of the smoke generating mixture can be set in such a way that the smoke has a white color, but also other color, for example red or green. The color of the smoke can be set in such a way that it will differentiate repellents with different characteristics. For example white smoke can be a standard smoke, the blue smoke can represent a repellent which is less harmful for water and aquatic animals, red can denote a repellent with higher percentage of an active ingredient, yellow with fluorescent preparation can be a repellent for night use. The smoke shell can contain disinfectant or perfume substances, or animals repellent substances.

The smoke generating mixture can contain terephthalic acid in solid form or hexachloroethane or potassium chlorate with lactose.

Distribution of visible smoke in principle sets the exact spatial reach of the active ingredient. The smoke therefore functions not only as a carrier, but it reliably shows the places which the personnel or a passer should avoid. Later, after the smoke settles and disappears, the active ingredients are spread on the surfaces and objects in the reach of the smoke, they are therefore not in the air and a person can freely move in the treated area.

The smoke shell can have a mechanically activated lighter equipped by an impact mechanism, which is activated by impact on the obstacle or a goal, thereby setting the smoke shell into action. In that case it is possible to shoot the smoke shell or throw it in the desired - even a remote - place. It is possible to use a launcher similar to the ones used in armed forces for a precise deployment. The launcher is usually construed as a firearm with a large caliber, whereby instead of a bullet, a smoke shell or a similar object is shot. The gas from explosion of the cartridge, bag-cartridge or detonator is used as a propellant, or a compressed gas is used. The smoke shell can have its own propulsive detonator, which guarantees the reactive movement of the smoke shell to the desired place.

The controlling component of the lighter can have various forms, for example it can be a circle which is pulled, or it can be a lever secured by a fuse, whereby the striker strikes an initiator or a light after the fuse is released.

In case the launcher is used, whereby the smoke shell is thrown by propulsive bag-cartridge, the ignition of the smoke shell can be related to the fire blaze from the bag-cartridge during the launch. The smoke shell container has an opening at its bottom with a channel leading to the lighter. The entry to the channel is covered by a thin layer, for example by paper. During deployment from the launcher the fire from the propulsive bag-cartridge blazes into the smoke shell, where it activates delayed combustion of the smoke generating mixture.

In order to ensure the safety of the smoke shell during the transport and also in order to simplify its production, the smoke shell can be produced by use of an aluminum container, which technologically resembles a container for drinks. Inside the container there is circumferentially deposited a cylindrical inner case made of, for example, cardboard. The upper edge of the case holds the circular partition, which has the openings for the outflow of the smoke. The partition is located under the upper edge of the container, which creates a space for location of the controlling element of the lighter in such a way that this controlling elements does not reach out of the container. The whole container can be packed in a transparent foil with a manual attached on its surface. The partition is, from its upper edge, secured by a cylindrical circle, which is upwardly defined by curved edge of the container. A circle form paper or a foil can be loosely placed on the partition. This circle can be also posited under the defining cylindrical circle, and after the activation this connections is severed or the circle burns.

The container can be also made of a steel sheet or a paper, a cardboard or plastic.

From the point of view of an optimal production of the smoke outflow it is preferable in the construction with the openings in the upper part of the container that the ratio of the height to the diameter of the container is between 1:1 and 3:1. It is especially preferable that the ratio of the height of an active part of the smoke shell (from the bottom to the partition) to the diameter is 2:1.

A method of production of a repellent or an insecticide with an active ingredient from a pyrethroid group, where a smoke generating mixture is inserted into a container in a form of coherent charge according to this invention, is also new and its essence lies in the fact that the active ingredient or multiple active ingredients in a powder form are heated and diluted in an alcohol dilution, which is subsequently put into touch with the particles of the powdery smoke generating mixture and the particles are then, preferably already in the wet state, molded into the charge, which shape and dimensions correspond to the container. The particles of the smoke generating mixture can be sprayed by the dilution with the active ingredient or dipped in that dilution.

The deficiencies in the prior state of the art are solved by a new method of distribution of the active ingredient from the pyrethroid group in the space, especially in the exteriors, according to this invention, which essence lies in the fact that the active ingredient is moved to the proximity of combustible smoke generating mixture, which is set ablaze and during its combustion the smoke and the heat is generated. By heat the active ingredient is evaporated and/or sublimated and the resulting smoke takes the active ingredient with it; it is carried by the smoke into the space, where the active ingredient stays and settles on the surfaces touched by the smoke. One-off smoke shell is used here, where the active ingredient is heated in a close contact with the burning particles of the mixture. The mixture produces heat and an intensive smoke during burning; the smoke takes the active ingredient with it; by overpressure the smoke is pressed out of the container and the smoke then carries the active ingredient into a space. The smoke shell can be thrown in the desired place by a launcher; preferably the smoke shell is activated by the fire blaze from the propulsive bag-cartridge during the launch. The smoke shell can be used in a forest and/or in a wooded area.

Abovementioned new method of distribution of the pyrethroids can be used not only in case of a one-off smoke shell, as described at the beginning of the description, but also in devices with a gradual release of the smoke, or in devices with repeatedly used hearth of the smoke generating substance. The smoke generating mixture can be led to the burner, where the active ingredient is dosed, which creates a productive device for the aerial curing of the larger fields against the vermin, for example of forests. It is also possible to take care of such spaces by throwing there the active smoke shells in respective distances.

Abovementioned technical solution is easy to use, the active ingredient is fast distributed in the large space and the treated area is clearly delimited by a visible smoke.

### Brief description of drawings

The technical solution is further disclosed by the drawings 1 to 4. The ratio of sizes of individual components and the shapes of individual container are for illustration only and cannot be interpreted as limiting the scope of protection.

On drawing 1 there is a view of the smoke shell with openings for smoke outflow in partial cross-section.

On drawings 2 to 5 there is an example of a use of the smoke shell. The temporal marks and ratio of size of the treated space to the size of the container of the smoke shell is for illustration purposes only.

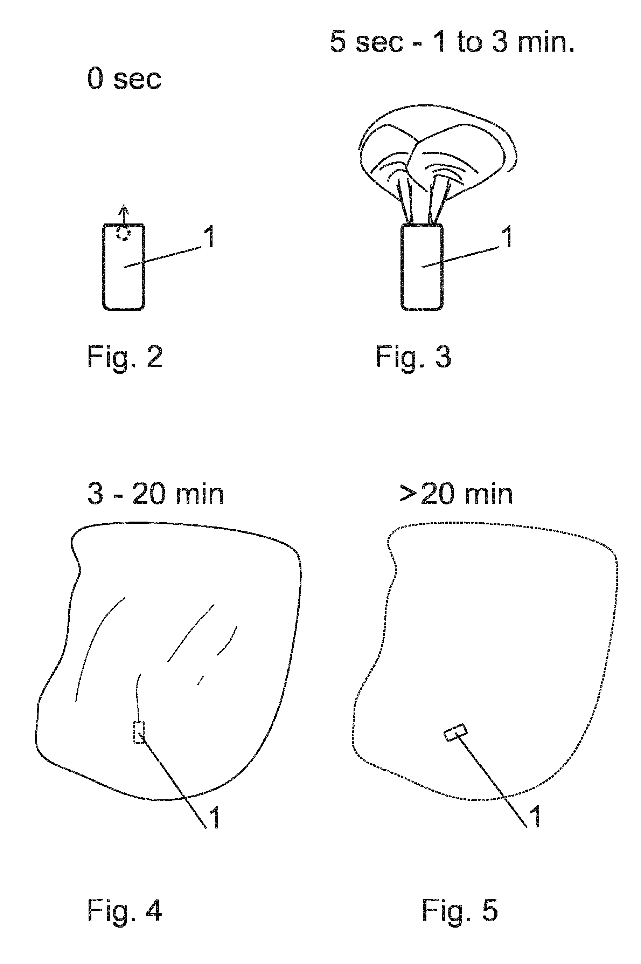

The drawing 2 shows the pulling of the circle which activates the lighter. The drawing 3 shows the outflow of the smoke with the active ingredient form the smoke shell. The drawing 4 shows the final phase of distribution of the smoke in the area around the smoke shell. The shape of the treated space is affected by the direction and intensity of the wind. The drawing 5 shows the delimitation of the treated area after the smoke has dissipated.

### Examples of realization

### Example 1

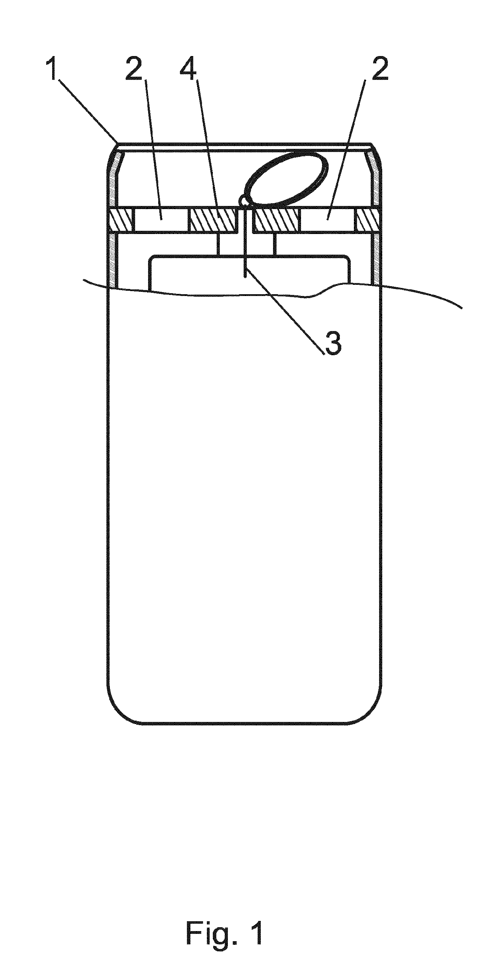

In this example according to drawings 1 to 3 the smoke shell has an aluminum container. The upper lid of the container 1 is substituted by the partition 4 with the openings 2. Through partition 4 runs outside a rod ended by the circle, which sets the lighter 3. The lighter 3 has a delay so the personnel can comfortably move away from the activated smoke shell.

The partition 4 is led from the upper edge down, into the container in such a way that the circle does not reach outside the container, which ensures the safety of the smoke shell during the transport. Similarly, the smoke shell can also be covered in foil which covers the upper part of the container with an access to the lighter, too.

In the container 1 there is a coiled cardboard cylinder on its inner circuit, which on the upper face delimits the position of the partition 4 with the openings 2. The partition 4 lean onto the cardboard cylinder, whereby the partition 4 itself is build of cardboard, too. Through the middle opening in the partition 4 runs the rod of the lighter 3. On the upper side of the partition 4 a circle from foil and paper is loosely placed, it forms a temporary stopper, a valve of the openings 2 in the partition 4. The circle is in the transport position held in place by a delimiting cylindrical circle, which reaches up to the upper edge of the container. In this example the edge of the aluminum container is folded inside, which keeps the delimiting circle in the correct position and also prevents the wounding on the outer edge of the container.

Inside the smoke shell the smoke generating mixture is placed in touch with the lighter 3. In the smoke generating mixture there is permethrin and transfluthrin in crystal form, mixed evenly. Permethrin forms 10% of the overall mass of the mixture and transfluthrin 2,5% of the mass.

The smoke generating mixture is shaped into a cylinder, with a diameter smaller that the inside of the container 1, which creates a space for the smoke outflow towards the openings 2.

In this example the container 1 has a ratio of the height to the diameter of the container 1 in 2:1, +/- 15%, and it contains circa 125 g of the smoke generating mixture with the active ingredients. The container 1 is place onto non-combustible basis, the circle is pulled out from the lighter 3, which also lifts the circle covering the openings 2 in the partition 4. The smoke generating mixture combusts, the active ingredients sublimate and are carried by the smoke out of the smoke shell. The smoke is generated for circa 1 minute. After circa 20 minutes the smoke in the treated area settles and dissipates into barely perceivable fog.

The effects of the insecticide are fast and apparent. In case of a heavily contaminated area, where the mosquitoes deal few or tens of stings per minute, the result can be perceived visually, because the area becomes insect-free. By one such smoke shell according to this example, an area up to 2.500 m² can be treated. The smoke shell can be used as prevention to the insects which caries malaria, Lyme disease, dengue fever, plague, West Nile fever, etc.

### Example 2

In this example the smoke shell has a container 1 with similar arrangement as in example 1. The partition 4 is from plastic and it has an opening with the thread in the middle. The opening is covered by the thin aluminum foil. The mechanically activated lighter 3 is separated from the container 1, it is therefore not inserted in the middle opening in the partition 4 during the transport. The whole set of the smoke shell and the lighter 3 is covered in a safety blister.

The smoke shell and the lighter 3 are picked out of the packaging by the personnel only during the preparation of the activation. The lighter 3 with the thread is pushed into the middle opening in the partitoin 4, which also penetrates the thin aluminum foil, which up to this point prevented the impurities from falling into the opening. The rest of the steps are the same as in example 1.

### Example 3

In this example the smoke shell has a container 1 with the diameter corresponding to the caliber of the launcher. For bigger caliber the container 1 can be subsequently equipped by sealing and guide rings around the circumference of the container 1. Correct orientation of the container 1 is necessary during loading of the launcher. This is because container has, on its bottom, an opening with a channel leading to the lighter 3, or leading directly to the smoke generating mixture. The entry into the channel is covered by a thin layer so during launching the fire from the propulsive bag-cartridge blazes into the smoke shell, which activates the delayed combustion of the smoke generating mixture.

The smoke shells according to this example can be launched up to the distance of 100m, so the personnel do not have to move close to the treated area at all.

### Example 4

In this example the smoke shell has a steel container 1. The smoke generating mixture has, due to its particular composition, a relatively small speed of burning; 120 g of the charge burns for circa 180 seconds. The speed is set by the choice and ratio of a fuel, a stabilizer of the burning, and a smoke or foam generating agent of the smoke generating mixture. The smoke generating mixture has a powder form during the production of the charge.

Transfluthrin in a solid form is heated so it becomes at least partially liquid; it is then mixed with permethrin and a synergizing substance piperonyl butoxide. The dilution is reduced by an alcohol, whereby the desired consistency and viscosity for further processing. It is the inserted to a form stuffed by the cardboard insert. In a layer which by its position corresponds to the position of an active zone of the lighter 3 there is a thin layer of a black gunpowder (on the basis of potassium nitrate, KNO₃) applied, which increases the development of the fire at the beginning of an activation. The particles of the smoke generating mixture are molded into a coherent charge corresponding to the inside of the container 1 by a high pressure. The charge with a cardboard cover has a smaller diameter as the inside of the container 1, the resulting air gap also has a heat-insulating function. The smoke shell can be held in hand and carried around the treated area for up to 2/3 of the time of burning. The temperature of the combustion of the charge is circa 100°C.

### Industrial applicability

Industrial applicability is obvious. According to this technical solution it is possible industrially and repeatedly produces and uses the repellent or insecticide with new method of distribution of the active ingredient by the smoke.

### List of related symbols

1- container
2- opening
3- lighter
4- partition

## Claims

1. A repellent or an insecticide in a container with an active ingredient from a pyrethroid group, whereby the active ingredient is a part of a smoke shell, the container (1) is an outer cover of the smoke shell with at least one opening (2) for an outflow of a smoke, whereby the smoke shell contains a combustible smoke generating mixture in a shape of a coherent charge which corresponds to a shape of the container, whereby the smoke shell is adjusted for an application of a lighter (3) which in operative position touches the smoke generating mixture,
is **characterized by** the fact that
the charge is molded from powdery particles of the smoke generating mixture,
the active ingredient is applied at least on a part of the surface of the particles,
whereby the particles are molded into the close contact in order to achieve evaporation and/or sublimation of the active ingredient during combustion of the smoke generating mixture and its subsequent carrying of the active ingredient by the smoke to a space outside the container (1).

2. The repellent or the insecticide in the container according to claim 1 i s **characterized by** the fact that the heat on the surface of the particle of the smoke generating mixture during its combustion is less than 150° C, preferably less than 125° C, especially preferably between 95° C and 105° C.

3. The repellent or the insecticide in the container according to claim 1 or 2 is **characterized by** the fact that the active ingredient forms from 0,1% to 25% of the mass of the smoke generating mixture.

4. The repellent or the insecticide in the container according to any of the claims 1 to 3 is **characterized by** the fact that the lighter (3) is a mechanically activated lighter (3), preferably the lighter (3) is separated from the smoke shell until preparation of the activation, whereby it is adjusted for the insertion into a respective opening in the smoke shell, which leads to the smoke generating substance.

5. The repellent or the insecticide in the container according to any of the claims 1 to 3 is **characterized by** the fact that the container (1) is appropriated for launching, especially from a launcher, and the lighter (3) is appropriated for the activation by a blaze from a bag-cartridge in the launcher.

6. The repellent or the insecticide in the container according to any of the claims 1 to 5 is **characterized by** the fact that the active ingredient is composed of one or multiple of the following substances: allethrin, bifenthrin, cypermethrin, cifenothrin, deltamethrin, empenthrin, etofenprox, imiprothrin, kadethrin, metofluthrin, S-methoprene, permethrin, pralletrin, resmethrin, sumithrin, tetramethrin, tralomethrin, transfluthrin.

7. The repellent or the insecticide in the container according to the claim 6 is **characterized by** the fact that the active ingredient is a combination of permethrin and transfluthrin, preferably in such a way that one substance forms up to 5% of the mass of the smoke generating mixture and second substance forms up to 20% of the mass smoke generating mixture.

8. The repellent or the insecticide in the container according to any of the claims 1 to 7 is **characterized by** the fact that it contains a synergizing substance, preferably piperonyl butoxide.

9. The repellent or the insecticide in the container according to any of the claims 1 to 8 is **characterized by** the fact that the smoke generating mixture contains terephthalic acid in solid form or hexachloroethane or potassium chlorate with lactose, preferably also colorings for coloring the smoke.

10. The repellent or the insecticide in the container according to any of the claims 1 to 9 is **characterized by** the fact that the ratio of the height of the container (1) to the diameter of the container (1) is between 1:1 and 3:1.

11. The repellent or the insecticide in the container according to any of the claims 1 to 10 is **characterized by** the fact that the container (1) is metal with a cylindrical cross-section, it has a circular partition (4) with openings (2), the partition is located under the level of the upper edge of the container (1), and a controlling element of the lighter (3) is above the partition (4), there is a circle placed on the partition (4) as a temporary cover of the openings (2), the position of the partition (4) is delimited by the cylindrical body placed on an inner circumference of the container (1) and that it is connected at the top by a cylindrical circle, which leans onto a folded edge of the container (1), preferably there is a gap and/or an isolation between the charge of the smoke generating mixture and the inner surface of the container (1).

12. A method of a production of a repellent or an insecticide with an active ingredient from a pyrethroid group, where a smoke generating mixture in a form of a coherent charge is inserted into a container (1) of a smoke shell, is **characterized by** the fact that the active ingredient or multiple active ingredients in a powder form are heated and diluted in an alcohol dilution, which is subsequently put in contact with the particles of the powdery smoke generating mixture, preferably put in contact by means of spraying or dipping, and the particles of the powdery smoke generating mixture, preferably still in a wet state, are molded into the charge which shape and dimensions correspond to those of the container.

13. A method of distribution of a repellent or an insecticide with an active ingredient from a pyrethroid group in space, especially in an exterior, where the active ingredient is evaporated and/or sublimated by heating is **characterized by** the fact that a one-off smoke shell, where the active ingredient is heated in a close contact with the burning particles of a mixture, whereby the mixture during burning generates heat and an intensive smoke, which takes the active ingredient with itself and the smoke is pressed out of a container by an overpressure and the active ingredient is carried by the smoke into the space.

14. The method of distribution of the repellent or the insecticide in space according to the claim 13 is **characterized by** the fact that the smoke shell is thrown into a desired area by a launcher, preferably the smoke shell is activated during a launch from the launcher by a fire from a propulsive bag-cartridge.

15. The method of distribution of the repellent or the insecticide in space according to the claim 13 or 14 is **characterized by** the **fact that the** smoke shell is used in a forest and/or in a wooded area.
